# EUROPÄISCHE PATENTSCHRIFT

(11) **EP 2 581 328 B1**
(45) Veröffentlichungstag und Bekanntmachung des Hinweises auf die Patenterteilung: **09.01.2019**
(21) Anmeldenummer: 12173597.1
(22) Anmeldetag: 26.06.2012
(51) Int. Cl.: B65G 1/04, B66F 9/07, B66F 9/14, B66F 9/18

(54) **Regalbediengerät und Kommissionierlager**
Shelf serving device and picking warehouse
Appareil de commande de rayonnage et stock de préparation de commande

(30) Priorität: 14.10.2011 DE 102011084551
(43) Veröffentlichungstag der Anmeldung: 17.04.2013
(73) Patentinhaber: Krones AG, 93073 Neutraubling (DE)
(72) Erfinder: Olszak, Tilo, 93073 Neutraubling (DE); Tiebel, Peter, 93077 Bad Abbach (DE)
(74) Vertreter: Grünecker Patent- und Rechtsanwälte PartG mbB

(56) Entgegenhaltungen:
- WO-A1-2011/006247
- DE-A1- 2 808 922
- DE-A1- 3 020 791
- DE-U1- 20 206 372
- US-A1- 2007 140 817

## Beschreibung

Die Erfindung betrifft ein Regalbediengerät gemäß Oberbegriff des Patentanspruchs 1 sowie ein Kommissionierlager gemäß Oberbegriff des Patentanspruchs 11, beide wie z.B. aus der DE 3020791 A1 bekannt.

In aus der Praxis bekannten Kommissionierlagern fährt das Regalbediengerät halb- oder vollautomatisch in Regalgassen, wobei die Lagerfächer eine Tiefe mit einfachen bis mehrfachen Abmessung der zu bevorratenden Waren haben. Das Regalbediengerät lädt Waren in vorherbestimmte Lagerfächer und holt beispielsweise zur individuellen Kommissionierung georderte Waren aus Lagerfächern, um sie an periphere Fördereinrichtungen zu übergeben. Die bekannten Regalbediengeräte entsprechen weitgehend klassischen Robotern. Sie unterscheiden sich von diesen lediglich in technischen Ausprägungen, wie Freiheitsgraden, Arbeitsradius- und -raum und Kinematik. Das Handling der Waren gestaltet sich zunehmend komplizierter, wenn die Gebindeformen, in denen die Waren vorliegen, zu vielfältig und zu sensibel sind, und wenn keine Transport- oder Ladehilfsmittel, wie Tablare, Behälter, Trays, und dgl. benutzt werden sollen. Es ist schwierig bis nahezu unmöglich, Regalbediengeräte zu entwickeln, mit denen sich mehr als beispielsweise 50 Gebindeformen verarbeiten lassen, und/oder die an Design- und Formänderungen der Gebinde anpassbar sind. Meist wird in solchen Fällen bei Robotern mit kleinem Arbeitsraum ein Greiferwechselsystem benutzt. Bei Regalbediengeräten ist dies aufgrund des großen Arbeitsbereiches und der Masse des Lastaufnahmemittels kaum möglich. In der Praxis gibt es derzeit für automatische Kommissionierlager ohne Ladehilfsmittel nahezu nur Paketanwendungen, d.h., es können nur Gebinde manipuliert werden, die glatte, stabile Oberflächen und eine quaderförmige Form haben. Auch müssen die Gleit- und Haftreibungskoeffizienten der Gebinde niedrig sein, damit das Regalbediengerät diese Gebinde mit dem Lastaufnahmemittel technisch überschaubar halb- oder vollautomatisch handhaben kann.

Bei einem aus WO 2011/006247 A1 bekannten Regalbediengerät bewegt sich zum Aufnehmen einer Ware aus einem Fach nur die Warenauflage des Teleskopgreiferdorns auf oder unter dem Fachboden in das Fach, um eine Ware aufzunehmen. Erst wenn die Ware auf der Warenauflage des Teleskopgreiferdorns in das Lastaufnahmemittel überführt ist, können zwei beabstandete seitliche Wangen die Ware in einer stabilen Transportposition festlegen. Die Wangen sind am Lastaufnahmemittel nur zueinander hin und voneinander weg verstellbar, um eine zunächst nur von der Warenauflage untergriffene, vom Teleskopgreiferdorn geholte Ware zu greifen und zu zentrieren, oder noch im Fach vom Teleskopgreiferdorn abzustreifen.

Bei einem aus DE 30 20 791 A1 bekannten Regalbediengerät für Hochlager sind an der Warenauflage des Teleskopgreiferdorns Endteile beweglich angeordnet, die unter dem Gewicht einer auf der Warenauflage liegenden Ware vorbei an den Rändern der Warenauflage nach oben verstellt werden, um die Ware in einer stabilen Position auf der Warenauflage zu sichern, und zwar in den Bewegungsrichtungen parallel zur Teleskopierrichtung des Teleskopgreiferdorns. Zusätzlich können am Lastaufnahmemittel stationäre seitliche Kufen montiert sein, die ein Verrutschen der Ware quer zur Teleskopierrichtung verhindern, sobald der Teleskopgreiferdorn die Ware auf das Lastaufnahmemittel überführt hat.

Aus der Praxis ist ein Regalbediengerät mit der Produktbezeichnung BEELAG der Firma Beewen mit einem Lastaufnahmemittel bekannt, dessen gabelartiger Lastentransportgreifer zwei quer zur Teleskopierrichtung beabstandete parallele Gurtförderer aufweist, die relativ zum Lastaufnahmemittel zu einer Seite des Lastaufnahmemittels teleskopierbar sind, bis sie unter der Öffnung des Fachbodens positioniert sind, an der Unterseite der darauf liegenden Ware angreifen und diese aus dem Lagerfach ziehen und auf stationären Gurtförderern des Lastaufnahmemittels abstellen. Da jeder Warentransportgreifer nur an einer Seite des Lastaufnahmemittels aus- und einfahrbar ist, wird zum Bedienen gegenüberliegender Lagerfächer ein zweiter, gegensinnig teleskopierbarer Warentransportgreifer benötigt. Die beiden Gurtförderer jedes Warentransportgreifers sind so weit beabstandet, dass die untergriffene Ware darauf eine stabile Transportposition einnimmt, wenn sie in das oder aus dem Lagerfach transportiert wird. Der Abstand zwischen den Gurtförderern bedingt jedoch eine extrem große Weite der Fachbodenöffnung, so dass der Fachboden nur durch schmale beidseitige Auflageschienen definiert ist. Aus diesem Grund ist die jeweilige Ware nur mit einem Ladehilfsmittel (Karton, Behälter oder Tablar oder dgl.) handhabbar, was einen unerwünscht großen Zusatzaufwand bedeutet und die Kapazität des Kommissionierlagers reduziert.

Der Erfindung liegt die Aufgabe zugrunde, ein Regalbediengerät bzw. Kommissionierlager zu schaffen, mit denen Waren ohne Ladehilfsmittel handhabbar sind, selbst wenn bei einem Zugriff mehrere Waren gehandhabt werden. Teil der Aufgabe ist es, ohne Modifikation am Regalbediengerät eine Vielzahl unterschiedlicher Verpackungskategorien oder Gebindekategorien, insbesondere für Getränke, ohne zusätzliche Ladehilfsmittel handhaben zu können, wie unter anderem Tetrapacks in einem halb offenen 12er-Karton, mit Folie zusammengeschweißte Flaschen-Sixpacks, Pappkartonagen mit Weinflaschen, 8er-Pack-2-Cola-PET-Flaschen-Gebinde mit integriertem selbsttragenden Hartkunststofftray, Fridge-Mate-Gebinde in Form länglicher Kartonagen mit einer Doppelreihe von annähernd 12 Getränkedosen, klassische Mehrweg-Bierkisten, klassische Mehrweg-Getränkekisten allgemein, Gebinde mit Konservendosen oder Konservengläsern in einem offenen Karton-Träger und Ähnliches.

Die gestellte Aufgabe wird mit den Merkmalen des Patentanspruchs 1 und den Merkmalen des Patentanspruchs 11 gelöst.

Der Teleskopgreiferdorn erfüllt in dieser Auslegung neben der Transportfunktion in Teleskopierrichtung mit der schmalen Warenauflage eine Tragfunktion, beides wird durch die Assistenz der Flanken und/oder des Niederhalters seitlich und/oder von oben stabilisiert. Aufgrund seiner schmalen Warenauflage eignet sich der Teleskopgreiferdorn zum Handhaben einer großen Vielzahl unterschiedlicher Verpackungs- und Gebindekategorien, gepaart mit dem entscheidenden Vorteil einer schmalen Fachbodenöffnung eines die Waren ohne Ladehilfsmittel stabil aufnehmenden Lagerfachs. Warenbewegungen in Teleskopierrichtung werden jeweils gemeinsam vom Teleskopgreiferdorn und den die stabile Transportposition sichernden Flanken und/oder dem Niederhalter ausgeführt. Das Regalbediengerät kann bei einem Zugriff eine oder mehrere Waren oder Gebinde gleichzeitig und ohne Ladehilfsmittel zügig handhaben, ohne dabei durch aufwändige Konstruktionen am Lagerfach oder Regal unterstützt zu werden und kommt mit einer Vielzahl beispielsweise Getränkeverpackungen zu recht, für die der Grenzwert nur die Weite der Fachbodenöffnung ist. Da keine Ladehilfsmittel benötigt werden, ist auch keine zusätzliche Fördertechnik für die Rückführung der Ladehilfsmittel notwendig.

Das Kommissionierlager ist für unterschiedlichste Gebindeformen oder Warenformen ohne Ladehilfsmittel einsetzbar, weist z.B. einfache Hochregale mit Lagerfächern mit sehr schmalen Fachbodenöffnungen auf, was einen hohen technischen Freiheitsgrad bei der Regalkonstruktion zulässt, d.h. auch eine beliebige Fachtiefe lediglich abhängig von der physikalischen Machbarkeit der Teleskopgreiferdornlänge. Das Kommissionierlager ermöglicht die zügige und störungsfreie Bevorratung und individuelle Kommissionierung georderter Waren nach Übergabe an periphere Förder- und Kommissioniereinrichtungen. Da der Teleskopgreiferdorn relativ zum Lastaufnahmemittel anhebbar und absenkbar ist, braucht für diese Bewegungen das Lastaufnahmemittel nicht mit seiner großen Masse bewegt zu werden, sondern kann das Lastaufnahmemittel schon von vornherein in der richtigen Ausrichtung zum Fachboden platziert sein. Beim Manipulieren einer oder mehrerer Waren mit dem Teleskopgreiferdorn assistieren die teleskopierbaren Flanken und/oder der wenigstens eine teleskopierbare Niederhalter, um die stabile Transportposition der Ware auf der Warenauflage herzustellen, wofür die Flanken bzw. der Niederhalter jeweils quer zur Teleskopierrichtung bewegbar sind bzw. ist. Jede Ware wird somit zumindest an zwei Bereichen, vorzugsweise sogar drei oder mehr Bereichen gleichzeitig gegriffen.

Ein Regalbediengerät kann sich in einer Lagergasse horizontal bewegen und dabei eine Lagerebene bzw. in vielen Anwendungsfällen mehrere bedienen. Eine vertikale Bewegung wird im Wesentlichen mittels einer am Regalbediengerät vertikal verfahrbaren Hubvorrichtung ausgeführt. Auf der Hubvorrichtung können ein oder mehrere Lastaufnahmemittel angebracht sein, die im Falle der Erfindung zum einen die Aufnahme und Einlagerung des Transportgutes und zum anderen dessen stabile Lagerung auf dem Regalbediengerät zur Aufgabe haben. Die Aufnahme und Einlagerung erfolgt mittels des Teleskopgreiferdorns und die eine stabile Transportposition sichernden Flanke, Flanken und/oder Niederhalter. Die stabile Lagerung auf dem Regalbediengerät erfolgt ergänzend zum Teleskopgreiferdorn mittels einer Fördereinrichtung bzw. Ablagevorrichtungen.

Obwohl zum relativen Anheben und Absenken des Teleskopgreiferdorns entsprechende Bewegungen der Hubvorrichtung am Regalbediengerät selbst nutzbar wären, ist bei einer zweckmäßigen Ausführungsform bei hohen Leistungsanforderungen der Teleskopgreiferdorn relativ zur Hubvorrichtung anhebbar und absenkbar. Hierfür kann zwischen der Hubvorrichtung und dem Teleskopgreiferdorn ein warentragfähiger Zusatzhub-Mechanismus vorgesehen sein. Hierbei kann zur Einlagerung oder Entnahme vorab die Hubvorrichtung auf den Fachboden ausgerichtet sein. Zur Entnahme wird oder ist der Teleskopgreiferdorn abgesenkt und unter die Fachbodenöffnung teleskopiert, und dann angehoben, bis die Ware vom Fachboden gelüftet ist, wobei er die Ware oder Waren mit Assistenz der Flanken und/oder des Niederhalters vom Lagerfach direkt auf das Lastaufnahmemittel überführen kann. Zur Einlagerung wird die Ware auf und mit dem Teleskopgreiferdorn angehoben und im Bereich der Fachbodenöffnung in das Lagerfach teleskopiert, und dann abgesenkt, bis die Ware auf dem Fachboden aufliegt, wobei er die Ware oder Waren beim Einlagervorgang mit Assistenz der Flanken und/oder des Niederhalters stabilisiert werden.

Bei einer zweckmäßigen Ausführungsform weist das Lastaufnahmemittel beiderseits des Teleskopgreiferdorns, vorzugsweise sogar mit seitlichen Zwischenabständen vom Teleskopgreiferdorn separiert, parallele Gurt- oder Bandförderer auf, wobei jeweils ein oder mehrere Gurt- oder Bandförderer in Teleskopierrichtung einzeln bzw. gekoppelt antreibbar und gegebenenfalls hintereinander liegend sein können. Eine sinnvoll Anzahl an hintereinanderliegenden Gurt- oder Bandförderer entspricht der Anzahl der hintereinander im Regal gelagerten und vom Teleskopgreiferdorn in einem Zuge handhabbaren Waren. Jede Ware findet auf diesen Bandförderern eine stabile Position. Ferner assistieren diese Gurt- oder Bandförderer dem Teleskopgreiferdorn gegebenenfalls in der letzten oder ersten Bewegungsphase bei einer Warenentnahme oder einer Warenabgabe. Ein oder mehr in Teleskopierrichtung hintereinander liegende Gurt- oder Bandförderer an jeder Seite des Teleskopgreiferdorns ermöglichen die Zwischenspeicherung von einer oder mehrerer Waren auf dem Lastaufnahmemittel. Ferner dienen diese Gurt- und Bandförderer zur Übernahme oder Übergabe an periphere Fördereinrichtungen bei der Kommissionierung oder Bevorratung.

Eine besonders zweckmäßige Ausführungsform zeichnet sich dadurch aus, dass derselbe einzelne Teleskopgreiferdorn relativ zum Lastaufnahmemittel wahlweise nach jeder Seite teleskopierbar ist, und, vorzugsweise, eingefahren in etwa mit dem Außenumriss der Plattform des Lastaufnahmemittels abschließt, um dann bei der Aufnahme oder Abgabe von Waren an periphere Fördereinrichtungen nicht zu stören. Dieses Konzept soll jedoch nicht ausschließen, an der Hubvorrichtung zwei gegensinnig teleskopierbare Teleskopgreiferdorne anzuordnen.

Bei einer zweckmäßigen Ausführungsform sind symmetrisch zum Teleskopgreiferdorn zwei teleskopierbare Flanken vorgesehen, die z.B. synchron mit dem Teleskopgreiferdorn angetrieben werden und jeweils für die stabile Transportposition auf dem Teleskopgreiferdorn sorgen. Um Waren unterschiedlicher Breiten handhaben zu können, sind die Flanken quer zur Teleskopierrichtung verstellbar oder sind an ihnen querverstellbare Warenstützelemente vorgesehen. Die Flanken kommen zum Angriff, entweder wenn der Teleskopgreiferdorn angehoben oder abgesenkt wird oder nachdem er angehoben oder abgesenkt worden ist.

Alternativ oder additiv ist der teleskopierebare Niederhalter vorgesehen und am Lastaufnahmemittel in Hochrichtung verstellbar oder mit wenigstens einem in Hochrichtung verstellbaren Warenstützelement ausgestattet. Der Niederhalter oder dessen Warenstützelement wird zweckmäßig abgesenkt, während oder nachdem der Teleskopgreiferdorn sich zum Abholen einer oder mehrerer Waren hebt. Beim Einbringen einer Ware kann der an der Ware angreifende Niederhalter beim Absenken des Teleskopgreiferdorns bewegungslos verharren oder zum Sicherstellen der stabilen Transportposition bis zur Ablage der Ware auf dem Fachboden mit abgesenkt werden.

Bei einer zweckmäßigen Ausführungsform bilden von den Gurt- oder Bandförderern im Lastaufnahmemittel je zwei beiderseits des Teleskopgreiferdorns sich gegenüberliegende ein bewegungsgekoppeltes Paar. Hierbei kann für dieses Paar ein gemeinsamer bewegungsumkehrbarer Antrieb vorgesehen sein, oder können zwei gekoppelte bewegungsumkehrbare Antriebe für je einen Gurt- oder Bandförderer vorgesehen sein.

Bei einer zweckmäßigen Ausführungsform ist am Teleskopgreiferdorn und/oder an zumindest einer Flanke und/oder am Niederhalter wenigstens ein zwischen einer Warenhintergreif- und einer Passivstellung umstellbarer Mitnehmer vorgesehen. In der Warenhintergreifstellung verhindert der Mitnehmer ein Abrutschen der Ware oder des Gebindes über das Teleskopgreiferdornende hinaus.

Bei einer weiteren zweckmäßigen Ausführungsform sind an der Warenauflage des Teleskopgreiferdorns und/oder an der Flanke und/oder am Niederhalter Noppenstrukturen aus elastischem Material, vorzugsweise wenigstens eine Noppenreihe aus halbelastischem Material, angeordnet. Diese Noppenstruktur kann der verbesserten Druckverteilung auf die Ware, speziell zwischen dem Teleskopgreiferdorn und der Ware, dienlich sein, könnte präventiv Beschädigungen durch Druckstellen an der Ware vermeiden, und könnte auch gleichzeitig die Reibung an der Ware massiv verstärken, so dass die Ware gegebenenfalls sogar in Kontakt oder leichtem Kontakt mit dem Fachboden eingeschoben oder herausgezogen werden kann.

Die Noppenstruktur, speziell auf dem Teleskopgreiferdorn, kann zur Minderung der Labilität der Ware auf der Warenauflage elastisch rückstellend und so ausgebildet und angeordnet sein, dass sie lastfrei quer zur Teleskopierrichtung eine Breite etwa entsprechend der Breite der Warenauflage beansprucht, jedoch unter Last auf eine Breite deutlich größer als die Breite umstellbar ist. Obwohl also trotz der schmalen Warenauflage des Teleskopgreiferdorns über die Noppenstruktur unter Last die Ware etwas stabiler abgestützt wird, braucht die Fachbodenöffnung nicht breiter zu sein als die Warenauflage, da die sich lastfrei rückstellende Noppenstruktur beim Absenken des Teleskopgreiferdorns leicht durch die schmale Fachbodenöffnung hindurchgeht.

Zweckmäßig hat die Warenauflage, vorzugsweise in einem Endabschnitt und/oder Zwischenabschnitt des mehrteilig ausgebildeten Teleskopgreiferdorns eine Breite von nur 40 mm bis 150 mm, vorzugsweise zwischen 80 mm und 100 mm. Die entsprechende Weite der Fachbodenöffnung braucht dem Teleskopgreiferdorn an jeder Seite nur wenige Millimeter Luft zu geben, so dass in dem Kommissionierlager auch Waren mit relativ kleinen Querabmessungen stabil bevorratet werden können.

In einer zweckmäßigen Ausführungsform des Kommissionierlagers sind die Ränder der Fachbodenöffnung annähernd V-förmig nach unten gerundet abgebogen oder winkelig abgekantet. Diese Maßnahme dient nicht nur der Versteifung des Fachbodens im Öffnungsrandbereich, sondern ist insbesondere zweckmäßig, wenn die Warenauflage des Teleskopgreiferdorns mit einer elastischen Struktur, wie einer Noppenstruktur, ausgestattet ist, die lastfrei beim Absenken des Teleskopgreiferdorns durch die Rundungen oder Winkel auf eine schmalere Breite zusammengeführt wird, als sie sie unter Last eingenommen hat.

Eine weitere, der Versteifung dienende Maßnahme ist es, die die Fachbodenöffnung begrenzenden Ecken des Fachbodens nach unten abzuwinkeln. Dies kann insbesondere zweckmäßig sein, wenn das jeweilige Lagerfach in Teleskopierrichtung in mehrere Abschnitte unterteilt ist.

Ein wichtiges Charakteristikum des Kommissionierlagers ist es, dass die Warengebinde, insbesondere Getränkegebinde, ohne Ladehilfsmittel und unterschiedlicher Kategorien und/oder Größen mit Querabmessungen mindestens entsprechend der Weite der Fachbodenöffnung und vom Teleskopgreiferdorn jeweils assistiert von der wenigstens einen Flanke und/oder dem wenigstens einen Niederhalter ohne Ladehilfsmittel handhabbar ist bzw. sind.

Anhand der Zeichnungen werden Ausführungsformen des Erfindungsgegenstandes erläutert. Es zeigen:
- Fig. 1: eine Schemadarstellung eines Kommissionierlagers mit wenigstens einem Lagerfach und einem Regalbediengerät bei der Handhabung z.B. einer Ware,
- Fig. 2: eine Vorderansicht eines Lagerfaches mit offenem Fachboden, mit darin angedeuteten Waren oder Gebinden unterschiedlicher Größen und/oder Kategorien,
- Fig. 3: eine Draufsicht eines Lagerfaches mit zwei hintereinander bevorrateten Waren,
- Fig. 4: eine Schemadraufsicht eines Regalbediengerätes in einer Grundstellung,
- Fig. 5: eine Ansicht des Regalbediengerätes von Fig. 4 in einer Waren-Handhabungsstellung,
- Fig. 6: eine Vorderansicht eines Lagerfaches in einer Handhabungsphase kurz vor Entnahme einer bevorrateten Ware mittels des Regalbediengerätes,
- Fig. 7: eine anschließende Handhabungsphase mit in einer stabilen Transportstellung angehobenen Ware im Lagerfach,
- Fig. 8: eine Draufsicht in einer weiteren anschließenden Handhabungsphase mit zwei aus dem Lagerfach auf das Regalbediengerät überführten Waren,
- Fig. 9: eine andere Handhabungsphase bei einer weiteren Ausführungsform eines Regalbediengerätes,
- Fig. 10: eine Handhabungsphase entsprechend der von Fig. 7 für eine weitere Ausführungsform eines Regalbediengerätes,
- Fig. 11: eine Detailvariante eines Lagerfaches in einer Schemadraufsicht, und
- Fig. 12: eine Vorderansicht des Lagerfaches von Fig. 11.

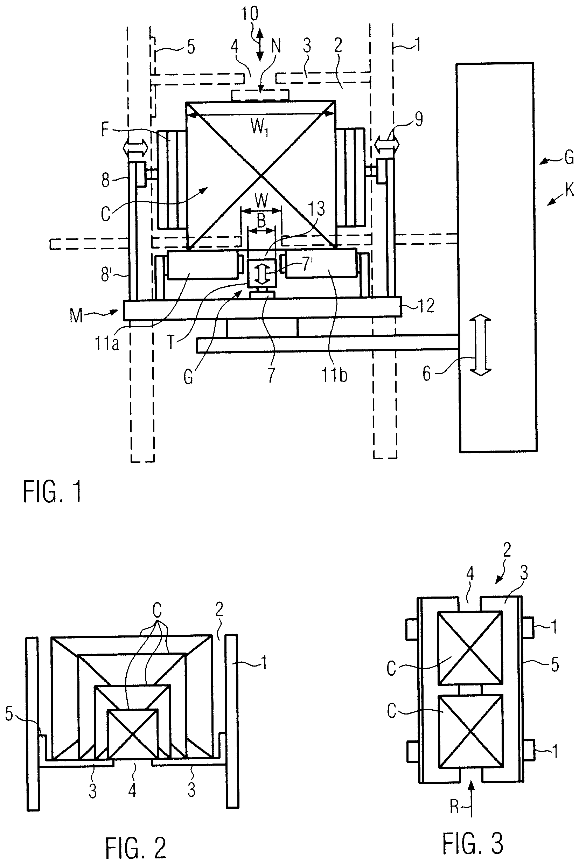

Fig. 1 zeigt Hauptkomponenten eines Kommissionierlagers K, beispielsweise in der Lebensmittel- oder Getränkeindustrie, mit einem Regalbediengerät G vor wenigstens einem gestrichelt angedeuteten Lagerfach 2, beispielsweise eines Hochregals, beim Handhaben einer Ware C.

Die Erfindung umfasst sowohl das Kommissionierlager K als auch das Regalbediengerät G.

Bei dem jeweiligen Lagerfach 2 handelt es sich um ein Lagerfach mit offenem Fachboden 3, d.h., zwei Fachbodenhälften, die jeweils an Standsäulen 1 befestigt sind und in etwa in der Mitte eine längsschlitzförmige Fachbodenöffnung 4 mit einer Weite W begrenzen. Jede Fachbodenhälfte ist beispielsweise mit einem Seitenwinkel 5 an wenigstens einer Standsäule 1 verankert und dient zur Bevorratung wenigstens einer Ware C oder mehrerer Waren, d.h., jedes Lagerfach 2 kann eine Tiefe aufweisen, die der einfachen oder zweifachen oder mehrfachen Tiefe einer Ware C entspricht, wobei die jeweilige Ware C in Weitenrichtung eine Querabmessung W1 besitzt, die größer ist als die Weite W der Fachbodenöffnung 4 und ohne Ladehilfsmittel behandelt wird.

Das z.B. auf dem Boden verfahrbare Regalbediengerät G weist ein annähernd plattformähnliches Lastaufnahmemittel M auf, das am Regalbediengerät G in Richtung eines Doppelpfeils 6 auf- und abverfahrbar ist. An dem Lastaufnahmemittel M ist wenigstens ein senkrecht zur Zeichnungsebene teleskopierbarer Warentransportgreifer T angeordnet, der, vorzugsweise, über einen warentragfähigen Zusatzhub-Mechanismus 7 in Richtung eines Doppelpfeils 7' relativ zum Lastaufnahmemittel M anhebbar und absenkbar ist. Erfindungsgemäß handelt es sich bei dem Warentransportgreifer T um einen, vorzugsweise in etwa mittig, am Lastaufnahmemittel M teleskopierbar angeordneten Teleskopgreiferdorn D mit einer oberseitigen Warenauflage 13 einer Breite B geringfügig kleiner als die Weite W der Fachbodenöffnung 4.

In der gezeigten Ausführungsform des Regalbediengerätes G in Fig. 1 sind ferner, beispielsweise an seitlichen Stützen 8', symmetrisch zum Teleskopgreiferdorn D synchron mit dem Teleskopgreiferdorn D teleskopierbare, hier mehrteilige, Flanken F angebracht, die über Zusatzantriebe 8 in Richtung von Doppelpfeilen 9 quer zur Teleskopierrichtung verstellbar sind. Alternativ oder additiv zu Flanken F kann wenigstens ein Niederhalter N in etwa oberhalb des Teleskopgreiferdorns D vorgesehen sein, der in Richtung eines Doppelpfeils 10 anhebbar und absenkbar ist. Ferner ist an dem Lastaufnahmemittel M mindestens ein Paar Gurt- oder Bandförderer 11a, 11b angeordnet, für die entweder ein gemeinsamer richtungsumkehrbarer oder zwei drehgekoppelte bewegungsumkehrbare Antriebe (nicht gezeigt) vorgesehen sind, um die Gurt- oder Bandförderer 11a, 11b in Teleskopierrichtung anzutreiben. Der Zusatzhub-Mechanismus 7 wie auch die Gurt- oder Bandförderer 11a, 11b und die Stützen 8' (an denen, falls vorhanden, der Niederhalter N angeordnet sein kann) sind an einer Plattform 12 des Lastaufnahmemittels M angeordnet.

Die Breite B der Warenauflage 13 des Teleskopgreiferdorns D beträgt beispielsweise zwischen etwa 40 mm bis 150 mm, vorzugsweise zwischen etwa 80 mm und 100 mm.

Fig. 2 verdeutlicht ein Lagerfach 2 mit dem aus den Fachbodenhälften gebildeten Fachboden 3, die mit Seitenwinkeln 5 an den Standsäulen 1 verankert sind und die mittige Fachbodenöffnung 4 begrenzen. Im Lagerfach 2 sind mehrere Waren C unterschiedlicher Formen und Größen und Kategorien angedeutet. Die Fachbodenöffnung 4 dient dem Zugriff des Teleskopgreiferdorns D. Die Fachbodenöffnung ist so schmal wie möglich, um die Vielfalt der zu bevorratenden Warenformen und -größen so wenig wie möglich einzuschränken.

Fig. 3 zeigt eine Draufsicht auf das Lagerfach 2, das eine Tiefe besitzt, die mindestens der einfachen Tiefe von hier zwei hintereinander bevorrateten Waren C entspricht. Das Lagerfach 2 kann jedoch eine beliebige Fachtiefe aufweisen, die lediglich von der physikalischen Machbarkeit der Länge des Teleskopgreiferdorns D abhängt. Die Teleskopierrichtung des Teleskopgreiferdorns D und der Flanken F bzw. des Niederhalters N an einer Seite des Lastaufnahmemittels M ist mit dem Doppelpfeil R angezeigt.

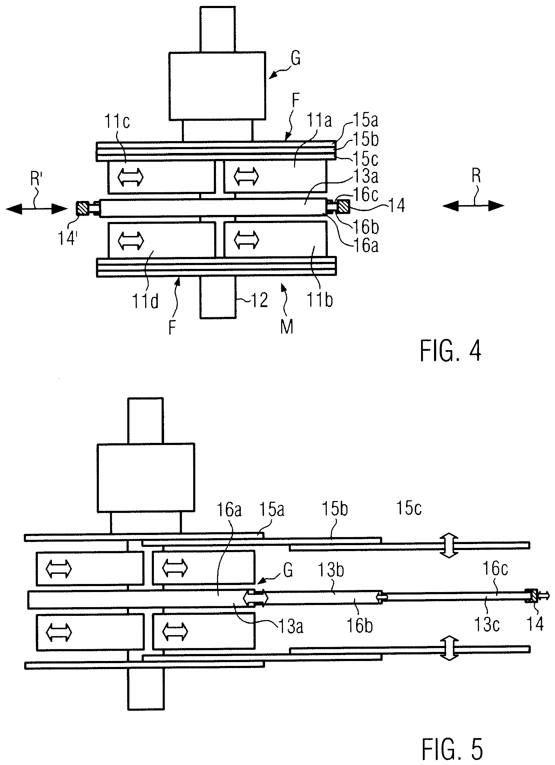

Fig. 4 ist eine Draufsicht des Regalbediengerätes G mit dem Lastaufnahmemittel M in einer Ausgangsstellung. Der eingezogene Teleskopgreiferdorn D schließt wie auch die Flanken F (der Niederhalter ist nicht gezeigt) in etwa mit dem Umriss des Lastaufnahmemittels M ab. Der Teleskopgreiferdorn D ist mittig im Lastaufnahmemittel angeordnet. Die Band- oder Gurtförderer (hier zwei Paare 11a, 11b; 11c, 11d) liegen jeweils in Teleskopierrichtung R hintereinander und sind beiderseits vom Teleskopgreiferdorn D beabstandet innerhalb der Flanken F platziert und jeweils paarweise unabhängig voneinander antreibbar.

Der in Fig. 4 gezeigte Teleskopgreiferdorn D ist nach beiden Seiten des Lastaufnahmemittels M teleskopierbar, um Lagerfächer an beiden Seiten wahlweise bedienen zu können und weist z.B. einen etwas breiteren Hauptabschnitt 16a, einen etwas schmaleren Mittelabschnitt 16b und einen noch schmaleren Endabschnitt 16c, jeweils mit gegebenenfalls unterschiedlich breiten Warenauflage-Abschnitten 13a, 13b, 13c, auf. Die Flanken F haben ebenfalls mehrere Abschnitte 15a, 15b, 15c, wie auch der gegebenenfalls oder alternativ vorgesehene, nicht gezeigte Niederhalter N (Fig. 1). Am Ende zumindest eines Endabschnittes 16c ist in Fig. 4 ein Mitnehmer 14 angeordnet, der zwischen einer Passivstellung und einer Warenhintergreifstellung umstellbar ist. Alternativ oder additiv könnte am Abschnitt 15c einer oder jeder Flanke F oder des nicht gezeigten Niederhalters N ein solcher umstellbarer Mitnehmer 14 vorgesehen sein.

Fig. 5 verdeutlicht das Regalbediengerät bzw. dessen Lastaufnahmemittel M bei maximal austeleskopiertem Teleskopgreiferdorn D und synchron austeleskopierten Flanken F, wobei zumindest die Abschnitte 15c der Flanken F in Richtung der Doppelpfeile 9 quer zur Teleskopierrichtung verstellbar sind oder (nicht gezeigt) querverstellbare Warenstützelemente aufweisen.

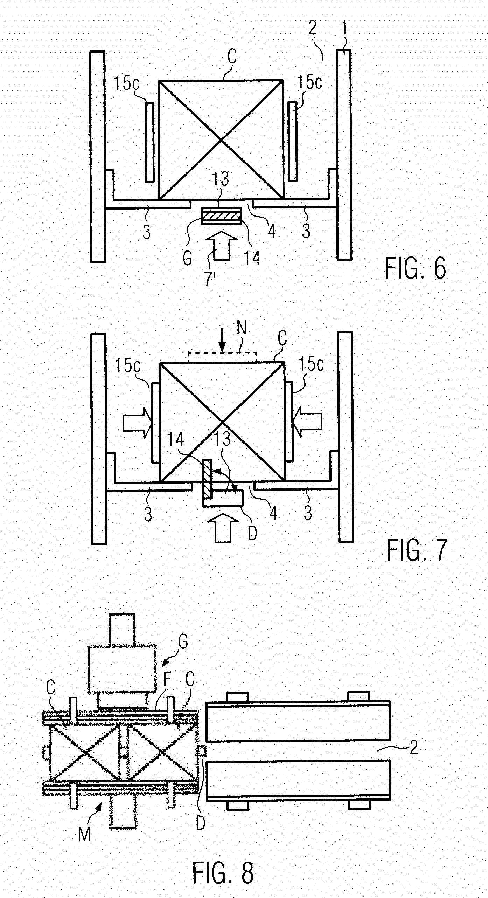

Fig. 6 zeigt eine Warenhandhabungsphase kurz vor der Entnahme einer im Lagerfach 2 bevorrateten Ware C. Der Teleskopgreiferdorn D ist austeleskopiert und befindet sich unterhalb der Fachbodenöffnung 4. Der Mitnehmer 14 ist in der Passivstellung. Die Flanken F sind ebenfalls synchron austeleskopiert, derart, dass sich die Endabschnitte 15c z.B. beiderseits der Seitenwände der Ware C befinden. Der Teleskopgreiferdorn D und die Flanken F sind abhängig davon entsprechend weit austeleskopiert, ob eine Ware oder mehrere Waren zu entnehmen sind.

In der nächsten Handhabungsphase in Fig. 7 ist der Teleskopgreiferdorn D in Richtung des Pfeiles 7' durch die Fachbodenöffnung 4 angehoben, so dass die Ware C auf der Warenauflage 13 an sich in einer kipplabilen Position untergriffen wird. Der Mitnehmer 14 ist in die Warenhintergreifstellung umgestellt. Die Endabschnitte 15c der Flanken F sind in Richtung der Pfeile 9 an die Seitenwände der Ware C angelegt und stellen die stabile Transportposition der Ware C auf der Warenauflage 13 sicher. Alternativ oder additiv ist der Niederhalter N auf die Oberseite der Ware C abgesenkt, um die stabile Transportposition zwischen dem Teleskopgreiferdorn D und dem Niederhalter N herzustellen. Die Ware C ist vom Fachboden 3 abgehoben. Der Teleskopgreiferdorn D steht in der Fachbodenöffnung 4 oder oberhalb derselben. Die Abschnitte 15c der Flanken F können an die Ware C in Querrichtung angelegt werden, nachdem der Teleskopgreiferdorn D die Ware in die angehobene Position von Fig. 7 überführt hat, oder bereits vorher, wobei im letztgenannten Fall Abschnitte 15c der Anhebebewegung entweder folgen oder die Seitenwände der Ware C an den Abschnitten 15c nach oben gleiten. Der Teleskopgreiferdorn D könnte unabhängig von den Flanken F und/oder dem Niederhalter N angesteuert werden.

In Fig. 8 ist die eine in Fig. 7 in der stabilen Transportposition gegriffene Ware C (oder sind zwei oder mehrere Waren C) mittels des Teleskopgreiferdorns D und der Flanken (bzw. des Niederhalters N) durch Einteleskopieren auf das Lastaufnahmemittel M des Regalbediengerätes G überführt. Die Gurt- oder Bandförderer 11a bis 11c haben die Waren C auf dem Lastaufnahmemittel M verteilt. Das Lagerfach 2, hier mit der zweifachen Warentiefe, ist geleert. Sollte nachfolgend das Regalbediengerät G in der Gasse zwischen Hochregalen oder vor einem Hochregal verfahren werden, ist es zweckmäßig, die jeweilige Ware weiterhin unter Andruck der Flanken F und/oder des Niederhalters N stabilisiert zu belassen. Dies ermöglicht höhere Beschleunigungen bei der Fahrt des Regalbediengerätes G. Gegebenenfalls werden vom Teleskopgreiferdorn D (und den Kippabstützungen) gleichzeitig mehrere Waren C bearbeitet.

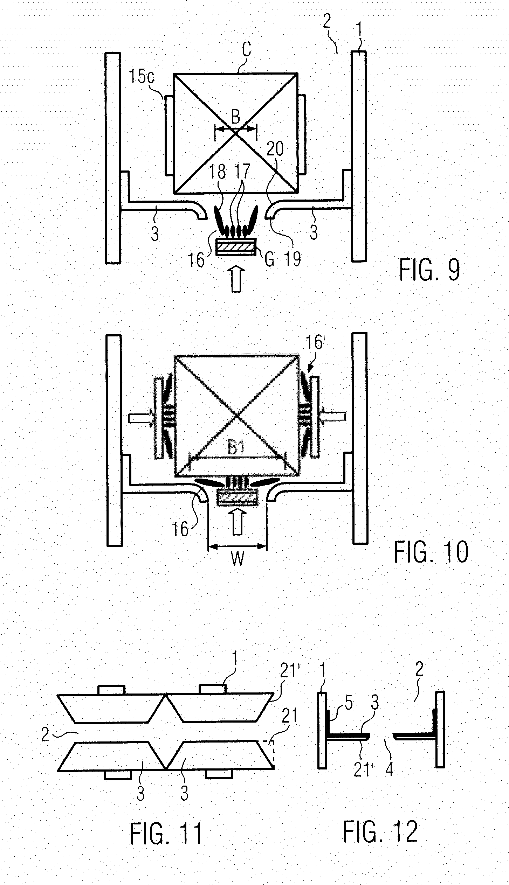

Fig. 9 verdeutlicht eine geänderte Ausführungsform des Teleskopgreiferdorns D, der auf seiner oberseitigen Warenauflage 13 zumindest bereichsweise eine halbelastische Noppenstruktur 16 aufweist, die beispielsweise der verbesserten Druckverteilung an der Ware C, der Beschädigungsprävention an der Ware, beispielsweise durch Druckstellen, dienlich ist und gleichzeitig die Reibung an der Ware massiv verstärken kann. Beispielsweise handelt es sich in Fig. 9 um wenigstens eine Noppenreihe mit inneren Noppen 17 und äußeren, längeren Noppen 18. Diese können, vorzugsweise, in lastfreiem Zustand nur eine Breite B' einnehmen, die etwa der Breite B der Warenauflage 13 entspricht. Als Zusatzmaßnahme können hier Ränder 19 der Fachbodenöffnung 4 V-förmig nach unten abgekantet oder, wie bei 20 angedeutet, gerundet abgebogen sein. Diese Maßnahme erhöht nicht nur die Steifigkeit des Fachbodens 3 im Bereich der Fachbodenöffnung 4, sondern dient auch einer Hilfsführung der Noppenstruktur 16, die sich in Fig. 9 beim Anheben des Teleskopgreiferdorns D nach Durchgang durch die Fachbodenöffnung 4 an der Unterseite der Ware C verbreitert und auch die labile Position der Ware C auf der Warenauflage 13 des Teleskopgreiferdorns D etwas stabilisieren hilft. Die Abschnitte 15c der Flanken assistieren dennoch zum Herstellen der stabilen Transportposition. Wird eine Ware C in Fig. 9 in das Lagerfach 2 überführt und auf den Fachboden 3 abgesenkt, dann gleiten die Noppen 17, 18 der Noppenstruktur leicht nach unten durch den Fachboden, wenn der Teleskopgreiferdorn D anschließend abgesenkt wird.

Fig. 10 verdeutlicht die unter der Last der Ware C bis auf eine Breite B1 verformte Noppenstruktur 16 von Fig. 9, beispielsweise beim Anheben einer zu entnehmenden Ware C. Die Breite B1 kann deutlich größer sein als die Weite W der Fachbodenöffnung 4. Auch an den Flanken F (bzw. dem Niederhalter N, nicht gezeigt in Fig. 10) können als Warenstützelemente ähnliche z.B. halbelastische Noppenstrukturen 16' vorgesehen sein, die sich unter Last aufspreizen, den Druck verteilen und die Reibung erhöhen. Anstelle der Noppenstrukturen 16, 16' können andere druckverteilende und/oder reibungserhöhende, z.B. elastische Einrichtungen verwendet werden, vor allem um die Waren vor Druckstellen und Beschädigungen besser zu schützen.

Fig. 11 und Fig. 12 zeigen eine Detailvariante eines Lagerfachs 2 für ein Kommissionierlager K. Die Fachbodenteile 3 sind hier an ihren Ecken 21 nach unten abgekantet, so dass unterseitige, etwa gleich hohe Abkantflansche 21' in die Fachbodenöffnung 4 schräg einlaufen. Das Lagerfach 2 ist hier beispielsweise in zwei Abschnitte jeweils entsprechend einer Warentiefe unterteilt, d.h., an jeder Standsäule 1 ist ein Fachbodenteil 3 beispielsweise mit einem nach oben geführten Seitenwinkel 5 fixiert. Die Abkantflansche 21' sind zweckmäßig geformt, indem die Spitze jeder Ecke gekappt ist, so dass der Abkantflansch 21' eine gleichbleibende Höhe hat.

Der in den Fig. 1 und Fig. 7 angedeutete Niederhalter N, der zum Herstellen der stabilen Transportposition der zunächst in einer kipplabilen Position auf der Warenauflage 13 des Teleskopgreiferdorns D aufliegenden Ware dient, bietet den zusätzlichen Vorteil, eine maximale Lagerfachnutzung in der Breite zu ermöglichen, da Flanken F entfallen können. Allerdings ist es durchaus denkbar, sowohl Flanken F als auch den Niederhalter N zum Assistieren des Teleskopgreiferdorns D einzusetzen.

Obwohl in den Fig. 4 und 5 der Teleskopgreiferdorn D nach beiden Seiten relativ zum Lastaufnahmemittel M teleskopierbar ist, könnte bei einer nicht gezeigten Ausführungsform für jede Arbeitsseite ein eigener teleskopierbarer Teleskopgreiferdorn D vorgesehen werden. Dies gilt analog auch für den Niederhalter N und/oder die Flanken F, die entweder wahlweise zu jeder Seite austeleskopierbar sind, oder jeweils doppelt am Lastaufnahmemittel M vorgesehen werden.

Das jeweils verwendete Hochregal des Kommissionierlagers K ist hier als Beispiel ein Einzelplatzregalsystem, d.h., in Querrichtung jedes Lagerfaches ist jeweils nur eine einzige Ware C zu bevorraten. Das Kommissionierlager K ist trotz unterschiedlichster Waren- oder Gebindeformen ohne Ladehilfsmittel zu betreiben, d.h. ohne Paletten, Tablare, Behälter und dgl., so dass keine zusätzliche Fördertechnik für die Rückführung der Ladehilfsmittel notwendig ist. Da die Flanken F in ihrem Abstand zueinander variabel sind, können sie voreingestellt werden, um den seitlichen Abstand zur Ware C jeweils möglichst gering zu halten, der letztendlich zum Einstellen der stabilen Transportposition rasch überbrückt wird.

Das Regalbediengerät G kommt mit einer Vielzahl an Warenformen und Kategorien zu recht, so auch mit verschiedensten Getränkeverpackungen. Grenzwert bildet die Weite der Fachbodenöffnung 4. Solche Waren sind beispielsweise Tetrapacks in einem halboffenen 12er-Karton, mit einer Folie zusammengeschweißte 6er-Packs-PET-Flaschen, Pappkartonagen mit Weinflaschen, 8er-Pack-Cola-PET-Flaschen auf einem selbsttragenden Hart-Kunststofftray als integrierten Teil der Ware, Fridge-Mate, d.h. längliche Kartonagen mit Doppelreihen von ungefähr 12 Getränkedosen, klassische Mehrweg-Bierkisten, klassische Mehrweg-Getränkekisten allgemein, Konservendosen oder Konservengläser in einem offenen Karton-Träger als integrierter Teil der Ware, und dgl..

Das Kommissionierlager K hat nicht die Vorratsspeicherung als Hauptfunktion, sondern macht Waren einzeln oder gegebenenfalls gruppenweise, und automatisiert zugreifbar, z.B. zum vollautomatischen Kommissionieren und Konfektionieren von Mischpaletten. Das Lastaufnahmemittel M mit dem Teleskopgreiferdorn D ist nicht nur an einem Regalbediengerät G einsetzbar, sondern könnte bei verschiedensten Robotertypen zum Einsatz kommen, wie bei gängigen Industrieroboterbauarten, beispielsweise einer Portalbauweise, oder einer Scara- oder Knickarm- oder Delta-Bauweise. Das Kommissionierlager K und/oder das Regalbediengerät G ist nicht nur in der Lebensmittel- und Getränkeindustrie einsetzbar, sondern kann zur automatisierten Handhabung unterschiedlichster Objekte eingesetzt werden.

## Patentansprüche

1. Regalbediengerät (G), insbesondere für Waren-Lagerfächer (2) mit offenem Fachboden aufweisende automatische Hochregal-Kommissionierlager (K), insbesondere der Lebensmittel- oder Getränkeindustrie, mit einem am Regalbediengerät (G) annähernd plattformähnlichen, höhenverstellbaren Lastaufnahmemittel (M), das wenigstens einen relativ zum Regalbediengerät (G) im Wesentlichen horizontal teleskopierbaren Transportgreifer (T) zum Untergreifen wenigstens einer Ware (C) aufweist, wobei der Transportgreifer (T) ein einziger, am Lastaufnahmemittel (M) in etwa mittiger Teleskopgreiferdorn (D) mit einer Warenauflage (13, 13a bis 13c) zum Untergreifen der Ware (C) in einer labilen Transportposition ist, **dadurch gekennzeichnet, dass** zum Einstellen einer stabilen Transportposition der vom Teleskopgreiferdorn (D) untergriffenen Ware (C) das Lastaufnahmemittel (M) seitlich des Teleskopgreiferdorns (D) im Wesentlichen parallel zur Teleskopierrichtung (R, R') des Teleskopgreiferdorns (D) teleskopierbare Flanken (F) und/oder oberhalb des Teleskopgreiferdorns (D) wenigstens einen teleskopierbaren Niederhalter (N) aufweist.

2. Regalbediengerät nach Anspruch 1, **dadurch gekennzeichnet, dass** zum relativen Anheben und Absenken des Teleskopgreiferdorns (D) relativ zum Lastaufnahmemittel (M) zwischen dem Lastaufnahmemittel (M) und dem Teleskopgreiferdorn (D) ein warentragfähiger Zusatzhub-Mechanismus (7) vorgesehen ist.

3. Regalbediengerät nach Anspruch 1, **dadurch gekennzeichnet, dass** das Lastaufnahmemittel (M) beiderseits des Teleskopgreiferdorns (D), vorzugsweise mit seitlichen Zwischenabständen vom Teleskopgreiferdorn (D) separiert, jeweils ein oder mehrere in Teleskopierrichtung (R, R') des Teleskopgreiferdorns (D) antreibbare und gegebenenfalls hintereinanderliegende, parallele Gurt- oder Bandförderer (11a bis 11d) aufweist.

4. Regalbediengerät nach Anspruch 1, **dadurch gekennzeichnet, dass** derselbe Teleskopgreiferdorn (D) relativ zum Lastaufnahmemittel (M) wahlweise nach jeder Seite aus- und einfahrbar ist und, vorzugsweise, eingefahren in etwa mit dem Außenumriss der Plattform des Lastaufnahmemittels (M) abschließt.

5. Regalbediengerät nach Anspruch 1, **dadurch gekennzeichnet, dass** symmetrisch zum Teleskopgreiferdorn (D) zwei Flanken (F, 15a bis 15c) vorgesehen und am Lastaufnahmemittel (M) quer zur Teleskopierrichtung (R, R') verstellbar sind und/oder quer verstellbare Warenstützelemente (16') aufweisen.

6. Regalbediengerät nach Anspruch 1, **dadurch gekennzeichnet, dass** der Niederhalter (N) am Lastaufnahmemittel (M) in Hochrichtung verstellbar ist und/oder wenigstens ein in Hochrichtung verstellbares Warenstützelement aufweist.

7. Regalbediengerät nach Anspruch 3, **dadurch gekennzeichnet, dass** von den Gurt- oder Bandförderern (11a bis 11c) im Lastaufnahmemittel (M) je zwei beiderseits des Teleskopgreiferdorns (D) sich gegenüberliegende ein bewegungsgekoppeltes Paar (11a, 11b; 11c, 11d) bilden, vorzugsweise jeweils mit einem gemeinsamen, bewegungsumkehrbaren Antrieb oder mit zwei gekoppelten bewegungsumkehrbaren Antrieben.

8. Regalbediengerät nach Anspruch 1, **dadurch gekennzeichnet, dass** am Teleskopgreiferdorn (D) und/oder an zumindest einer Flanke (F, 15a bis 15c) und/oder am Niederhalter (N) wenigstens ein zwischen einer Warenhintergreif- und einer Passivstellung umstellbarer Mitnehmer (14) vorgesehen ist.

9. Regalbediengerät nach Anspruch 1, **dadurch gekennzeichnet, dass** an der Warenauflage (13, 13a bis 13c) des Teleskopgreiferdorns (D) und/oder an jeder Flanke (F, 15a bis 15c) und/oder am Niederhalter (N) eine Noppenstruktur (16, 16') aus elastischem Material, vorzugsweise wenigstens eine Noppenreihe aus halbelastischem Material, angeordnet ist.

10. Regalbediengerät nach Anspruch 9, **dadurch gekennzeichnet, dass** zumindest die Noppenstruktur (16) auf der Warenauflage (13, 13a bis 13c) des Teleskopgreiferdorns (D) elastisch rückstellend so ausgebildet und angeordnet ist, dass sie lastfrei quer zur Teleskopierrichtung (R, R') eine Breite (B') etwa entsprechend der Breite (B) der Warenauflage (13, 13a bis 13c) beansprucht und unter Last auf eine Breite (B1) deutlich größer als die Breite (B) umstellbar ist.

11. Kommissionierlager (K) mit wenigstens einem Hochregal mit Waren-Lagerfächern (2) mit mittig offenen Fachböden (3) und wenigstens einem vor den Lagerfächern (2) verfahrbaren Regalbediengerät (G), insbesondere zur automatischen Waren-Kommissionierung und Waren-Vorratsspeicherung, insbesondere in der Lebensmittel- und Getränkeindustrie, wobei das Regalbediengerät (G) an einem höhenverstellbaren, plattformähnlichen Warenauflagemittel (M) wenigstens einen relativ zum Warenauflagemittel (M) etwa horizontal teleskopierbaren Warentransportgreifer (T) aufweist, der zum Untergreifen wenigstens einer Ware (C) ausgestattet ist und durch die Fachbodenöffnung (4) anheb- und absenkbar ist, wobei der Warentransportgreifer (T) ein einziger Teleskopgreiferdorn (D) ist, dessen Warenauflage (13, 13a bis 13c) eine quer zur Teleskopierrichtung (R, R') gesehene Breite (B) aufweist, die die Ware (C) in nur einer kipplabilen Transportposition abstützt, und wobei die Fachbodenöffnung (4) eine gegenüber der Breite (B) der Warenauflage (13, 13a bis 13c) nur geringfügig größere Weite (W) aufweist, **dadurch gekennzeichnet, dass** der Teleskopgreiferdorn (D) relativ zum Lastaufnahmemittel (M) anheb- und absenkbar ist, und dass zum Herstellen einer stabilen Transportposition der Ware (C) auf der Warenauflage (13, 13a bis 13c) am Lastaufnahmemittel (M) innerhalb der Lagerfachbreite teleskopierbare Flanken (F, 15a bis 15c) und/oder wenigstens ein teleskopierbarer Niederhalter (N), jeweils quer zur Teleskopierrichtung (R, R') bewegbar, angeordnet ist bzw. sind.

12. Kommissionierlager nach Anspruch 11, **dadurch gekennzeichnet, dass** die Warenauflage (13, 13a bis 13c), vorzugsweise in einem Endabschnitt und/oder Zwischenabschnitt (16b, 16c) des mehrteilig ausgebildeten Teleskopgreiferdorns (D) eine Breite von 40 mm bis 150 mm, vorzugsweise zwischen 80 mm und 100 mm, hat.

13. Kommissionierlager nach Anspruch 11, **dadurch gekennzeichnet, dass** die Ränder (19) der Fachbodenöffnung (4) annähernd V-förmig nach unten gerundet abgebogen oder winkelig abgekantet sind.

14. Kommissionierlager nach Anspruch 11, **dadurch gekennzeichnet, dass** die Fachbodenöffnung (4) begrenzende Ecken (21) des Fachbodens (3) nach unten abgewinkelte Abkantflansche 21' bilden.

15. Kommissionierlager nach wenigstens einem der Ansprüche 11 bis 14, **dadurch gekennzeichnet, dass** die Waren (C) Gebinde ohne Ladehilfsmittel unterschiedlicher Kategorien und/oder Größen mit Querabmessungen (W1) mindestens entsprechend der Weite (W) der Fachbodenöffnung (4) und vom Teleskopgreiferdorn (D) ohne Ladehilfsmittel transportierbar sind.

## Claims

1. A rack-serving unit (G), in particular for automatic high rack order-picking warehouses (K) including article-storing boxes (2) with an open box bottom, especially for the food and beverage industry, comprising a load pick-up device (M) which is about platform-like and height-adjustable and provided at the rack-serving unit (G) and which includes at least one telescopic transport gripper (T) which can be telescoped substantially horizontally and relative to the rack-serving unit (G) for gripping under at least one article (C), wherein the transport gripper (T) is a single telescopic gripper pin (D) arranged at about the center of the load pick-up device (M) including a rest (13, 13a to 13c) for the articles for gripping under the article (C) in an unstable position, **characterized in that** for setting a stable transport position for the article (C) being gripped by said telescopic gripper pin (D) the load pick-up device (M) has, at the side of the telescopic gripper pin (D), telescopic flanks (F) which are substantially parallel to the telescoping direction (R, R') of the telescopic gripper pin (D), and/or at least one telescopic hold-down device (N) above the telescopic gripper pin (D).

2. The rack-serving unit according to claim 1, **characterized in that** an additional lifting mechanism (7) capable of bearing articles is provided between the load pick-up device (M) and the telescopic gripper pin (D) for relatively lifting and lowering the telescopic gripper pin (D) relative to the load pick-up device (M).

3. The rack-serving unit according to claim 1, **characterized in that** the load pick-up device (M) includes on both sides of the telescopic gripper pin (D), preferably separated from the telescopic gripper pin (D) by means of lateral intermediate spaces, one or several parallel belt or band conveyors (11a to 11d), respectively, which can be driven in the telescoping direction (R, R') of the telescopic gripper pin (D) and are, if need be, positioned one after the other.

4. The rack-serving unit according to claim 1, **characterized in that** the same telescopic gripper pin (D) is optionally either extensible or retractable to each side relative to the load pick-up device (M), and is about in line, preferably when in the retracted state, with the outer contour of the platform of the load pick-up device (M).

5. The rack-serving unit according to claim 1, **characterized in that** two flanks (F, 15a to 15c) are provided symmetrically to the telescopic gripper pin (D) and can be adjusted at the load pick-up device (M) transversely with regard to the telescoping direction (R, R') and/or include transversely adjustable article supporting elements (16').

6. The rack-serving unit according to claim 1, **characterized in that** the hold-down device (N) can be vertically adjusted at the load pick-up device (M) and/or includes at least one vertically adjustable article supporting element.

7. The rack-serving unit according to claim 3, **characterized in that** two of the belt or band conveyors (11a to 11c) in the load pick-up device (M) opposing on both sides of the telescopic gripper pin (D), respectively form a motion-coupled pair (11a, 11b; 11c, 11d), preferably with a common, motion-reversible drive or with two coupled motion-reversible drives, respectively.

8. The rack-serving unit according to claim 1, **characterized in that** either the telescopic gripper pin (D) and/or at least one flank (F, 15a to 15c) and/or the hold-down device (N) is/are provided with at least one carrier (14) switchable between an article gripping setting and a passive setting.

9. The rack-serving unit according to claim 1, **characterized in that** either the rest (13, 13a to 13c) for the articles of the telescopic gripper pin (D) and/or each flank (F, 15a to 15c) and/or the hold-down device (N) is/are provided with a knob structure (16, 16') of a flexible material, preferably with at least one row of knobs of a semi-flexible material.

10. The rack-serving unit according to claim 9, **characterized in that** at least the knob structure (16) provided on the rest (13, 13a to 13c) for the articles of the telescopic gripper pin (D) is formed in a flexibly resettable manner and arranged such that it takes, when in the off-load state, transverse to the telescoping direction (R, R') a width (B') which corresponds to about the width (B) of the rest (13, 13a to 13c) for the articles and can be adapted, when in the on-load state, to a width (B1) which is distinctly larger than the width (B).

11. An order-picking warehouse (K), comprising at least one high rack including article storing boxes (2) with box bottoms (3) being open in the center thereof, and at least one rack-serving unit (G) which can be maneuvered in front of the storing boxes (2), in particular for automatically order-picking and stockpiling articles, especially in the food and beverage industry, wherein the rack-serving unit (G) includes at least one article transport gripper (T) provided at a height-adjustable, platform-like article-bearing element (M) and being about horizontally telescopic relative to said article-bearing element (M), which can grip under at least one article (C) and can be either lifted or lowered through the box bottom opening (4), wherein the article transport gripper (T) is a single telescopic gripper pin (D), the rest (13, 13a to 13c) thereof for the articles being of a width (B) viewed transversely with regard to the telescoping direction (R, R'), for supporting the article (C) in a just unstable transport position, and wherein the box bottom opening (4) has a width (W) which is just slightly larger than the width (B) of the rest (13, 13a to 13c) for the articles, **characterized in that** the telescopic gripper pin (D) can either be lowered or lifted relative to the load pick-up device (M), and **in that** for obtaining a stable transport position of the article (C) on the rest (13, 13a to 13c) for the articles telescopic flanks (F, 15a to 15c) and/or at least one telescopic hold-down device (N) is or are arranged at the load pick-up device (M) within the storing box width, each being transversely movable with regard to the telescoping direction (R, R').

12. The order-picking warehouse according to claim 11, **characterized in that** the rest (13, 13a to 13c) for the articles, preferably in an end portion and/or an intermediate portion (16b, 16c) of the telescopic gripper pin (D) formed with multiple parts, is of a width ranging between 40mm and 150mm, preferably between 80mm and 100mm.

13. The order-picking warehouse according to claim 11, **characterized in that** the rims (19) of the box bottom opening (4) are either bent downwards or angularly chamfered in an about V-shaped form.

14. The order-picking warehouse according to claim 11, **characterized in that** corners (21) limiting the box bottom opening (4) of the box bottom (3) form downwards angled chamfer flanges (21').

15. The order-picking warehouse according to at least one of claims 11 to 14, **characterized in that** the articles (C) are packages of different categories and/or sizes and of transverse dimensions (W1) corresponding to at least the width (W) of the box bottom opening (4) and can be conveyed by said telescopic gripper pin (D) without loading equipment.

## Revendications

1. Appareil de desserte de rayonnages (G), notamment pour des magasins automatiques de stockage à rayonnages en hauteur (K) à cases de stockage de marchandises (2) à fond de case ouvert pour la préparation de commandes, notamment dans l'industrie des produits alimentaires ou des boissons, comprenant un moyen d'accueil de charge (M), qui est réglable en hauteur approximativement à la manière d'une plateforme sur l'appareil de desserte de rayonnages (G), et qui comporte au moins un préhenseur de transport (T) pouvant être déplacé sensiblement de façon horizontale, de manière télescopique par rapport à l'appareil de desserte de rayonnages (G), en vue de venir s'engager sous au moins une marchandise (C), le préhenseur de transport (T) étant un seul mandrin préhenseur télescopique (D) avec un appui de marchandise (13, 13a à 13c), situé sensiblement de manière centrale sur le moyen d'accueil de charge (M) et destiné à venir s'engager sous la marchandise (C) dans une position de transport instable,
**caractérisé en ce que** pour établir une position de transport stable de la marchandise (C) sous laquelle a été engagé le mandrin préhenseur télescopique (D), le moyen d'accueil de charge (M) comporte, latéralement au mandrin préhenseur télescopique (D), des flancs (F) pouvant être déplacés de manière télescopique sensiblement de manière parallèle à la direction de déplacement télescopique (R, R') du mandrin préhenseur télescopique (D), et/ou au-dessus du mandrin préhenseur télescopique (D), au moins un serre-flan (N) à déplacement télescopique.

2. Appareil de desserte de rayonnages selon la revendication 1, **caractérisé en ce que** pour le soulèvement et l'abaissement relatifs du mandrin préhenseur télescopique (D) par rapport au moyen d'accueil de charge (M), il est prévu un mécanisme de soulèvement additionnel (7) susceptible de supporter la marchandise, entre le moyen d'accueil de charge (M) et le mandrin préhenseur télescopique (D).

3. Appareil de desserte de rayonnages selon la revendication 1, **caractérisé en ce que** le moyen d'accueil de charge (M) présente de part et d'autre du mandrin préhenseur télescopique (D), de préférence en étant séparé du mandrin préhenseur télescopique (D) par des distances d'espacement latérales, respectivement un ou plusieurs transporteurs à bande ou à courroie (11a à 11d) parallèles, qui pouvent être entraînés dans la direction de déplacement télescopique (R, R') du mandrin préhenseur télescopique (D), et qui, le cas échéant, sont placés les uns derrière les autres.

4. Appareil de desserte de rayonnages selon la revendication 1, **caractérisé en ce que** le même mandrin préhenseur télescopique (D) peut être extrait et rétracté sélectivement vers chaque côté par rapport au moyen d'accueil de charge (M), et, de préférence, arrive sensiblement au ras du tracé de contour extérieur de la plateforme du moyen d'accueil de charge (M), lorsqu'il est en position rétractée.

5. Appareil de desserte de rayonnages selon la revendication 1, **caractérisé en ce que** de manière symétrique au mandrin préhenseur télescopique (D), sont prévus deux flancs (F, 15a à 15c), qui sont déplaçables sur le moyen d'accueil de charge (M), transversalement à la direction de déplacement télescopique (R, R'), et/ou qui présentent des éléments d'appui de marchandise (16') déplaçables transversalement.

6. Appareil de desserte de rayonnages selon la revendication 1, **caractérisé en ce que** le serre-flan (N) est déplaçable dans la direction de la hauteur sur le moyen d'accueil de charge (M), et/ou comporte au moins un élément d'appui de marchandise déplaçable dans la direction de la hauteur.

7. Appareil de desserte de rayonnages selon la revendication 3, **caractérisé en ce que** parmi les transporteurs à bande ou à courroie (11a à 11c) dans le moyen d'accueil de charge (M), deux forment respectivement de manière opposée de chaque côté du mandrin préhenseur télescopique (D), une paire (11a, 11b ; 11c, 11d) couplée en mouvement, de préférence respectivement avec un entraînement de mouvement inversible, commun, ou avec deux entraînements de mouvement inversibles, couplés.

8. Appareil de desserte de rayonnages selon la revendication 1, **caractérisé en ce que** sur le mandrin préhenseur télescopique (D) et/ou sur au moins un flanc (F, 15a à 15c) et/ou sur le serre-flan (N), il est prévu au moins un entraîneur (14) pouvant être déplacé entre une position d'engagement derrière la marchandise et une position passive.

9. Appareil de desserte de rayonnages selon la revendication 1, **caractérisé en ce que** sur l'appui de marchandise (13, 13a à 13c) du mandrin préhenseur télescopique (D) et/ou sur chaque flanc (F, 15a à 15c) et/ou sur le serre-flan (N), est agencée une structure à plots (16, 16') en un matériau élastique, de préférence au moins une rangée de plots en un matériau semi-élastique.

10. Appareil de desserte de rayonnages selon la revendication 9, **caractérisé en ce qu'**au moins la structure à plots (16) sur l'appui de marchandise (13, 13a à 13c) du mandrin préhenseur télescopique (D) est d'une configuration à rappel élastique et est agencée de manière telle, que hors charge, elle occupe, transversalement à la direction de déplacement télescopique (R, R'), une largeur (B') correspondant environ à la largeur (B) de l'appui de marchandise (13, 13a à 13c), et que, sous charge, elle puisse passer à une largeur (B1) nettement plus grande que la largeur (B) .

11. Magasin de stockage (K) pour la préparation de commandes comprenant au moins un système de rayonnages en hauteur avec des cases de stockage de marchandises (2) à fonds de case (3) ouverts au milieu, et au moins un appareil de desserte de rayonnages (G) pouvant être déplacé au-devant des cases de stockage (2), notamment pour la préparation automatique de commandes de marchandises et le stockage automatique de réserve de marchandises, en particulier dans l'industrie des produits alimentaires et des boissons, magasin de stockage
dans lequel l'appareil de desserte de rayonnages (G) comporte sur un moyen d'accueil de charge (M) sensiblement en forme de plateforme et réglable en hauteur, au moins un préhenseur de transport de marchandises (T) pouvant être déplacé sensiblement de façon horizontale, de manière télescopique, par rapport au moyen d'accueil de charge (M) et qui est équipé pour s'engager sous au moins une marchandise (C) et peut être soulevé et abaissé à travers l'ouverture de fond de case (4),
dans lequel le préhenseur de transport de marchandises (T) est un seul mandrin préhenseur télescopique (D) dont l'appui de marchandise (13, 13a à 13c) présente une largeur (B) vue dans une direction transversale à la direction de déplacement télescopique (R, R'), qui ne soutient la marchandise (C) que dans une position de transport instable en basculement, et
dans lequel l'ouverture de fond de case (4) ne présente une largeur d'ouverture (W) que très légèrement plus grande que la largeur (B) de l'appui de marchandise (13, 13a à 13c),
**caractérisé en ce que** le mandrin préhenseur télescopique (D) peut être soulevé et abaissé par rapport au moyen d'accueil de charge (M), et **en ce que** pour établir une position de transport stable de la marchandise (C) sur l'appui de marchandise (13, 13a à 13c), des flancs (F, 15a à 15c) pouvant être déplacés de manière télescopique à l'intérieur de la largeur de la case de stockage et/ou un serre-flan (N) pouvant être déplacé de manière télescopique sont ou respectivement est prévu sur le moyen d'accueil de charge (M) en étant mobiles chacun respectivement transversalement à ladite direction de déplacement télescopique (R, R').

12. Magasin de stockage pour la préparation de commandes selon la revendication 11, **caractérisé en ce que** l'appui de marchandise (13, 13a à 13c) possède de préférence dans un tronçon d'extrémité et/ou un tronçon intermédiaire (16b, 16c) du mandrin préhenseur télescopique (D) réalisé en plusieurs parties, une largeur de 40 mm à 150 mm, de préférence entre 80 mm et 100 mm.

13. Magasin de stockage pour la préparation de commandes selon la revendication 11, **caractérisé en ce que** les bords (19) de l'ouverture de fond de case (4) sont courbés de manière arrondie vers le bas ou sont pliés angulairement, approximativement en forme de V.

14. Magasin de stockage pour la préparation de commandes selon la revendication 11, **caractérisé en ce que** des coins (21) du fond de case (3) délimitant l'ouverture de fond de case (4), forment des flasques de pliage (21') pliés angulairement vers le bas.

15. Magasin de stockage pour la préparation de commandes selon l'une au moins des revendications 11 à 14, **caractérisé en ce que** les packs de marchandises (C) sans moyens auxiliaires de chargement et de différentes catégories et/ou de grandeurs, avec des dimensions transversales (W1) correspondant au moins à la largeur d'ouverture (W) de l'ouverture de fond de case (4), peuvent être transportés par le mandrin préhenseur télescopique (D), sans moyens auxiliaires de chargement.
